# EUROPÄISCHE PATENTSCHRIFT

(11) **EP 0 620 191 B1**
(45) Veröffentlichungstag und Bekanntmachung des Hinweises auf die Patenterteilung: **02.07.1997**
(21) Anmeldenummer: 94104352.3
(22) Anmeldetag: 19.03.1994
(51) Int. Cl.: C02F 3/30

(54) **Vorrichtung zur Reinigung von Rohabwasser**
Apparatus for crude waste water purification
Appareil pour la purification d'eau usée brute

(30) Priorität: 10.04.1993 DE 4311934
(43) Veröffentlichungstag der Anmeldung: 19.10.1994
(73) Patentinhaber: STADT BAD SODEN, Salmünster (DE)
(72) Erfinder: Weidner, Ludwig, D-63628 Bad Soden-Salmünster (DE)
(74) Vertreter: Müller-Wolff, Thomas, Dipl.-Ing.

(56) Entgegenhaltungen:
- DE-A- 1 658 112
- DE-A- 3 729 239
- DE-B- 2 412 543
- US-A- 3 900 394
- US-A- 4 278 547
- US-A- 5 234 595

## Beschreibung

Die Erfindung betrifft eine Vorrichtung zum Reinigen von insbesondere kommunalem Abwasser in einer biologischen Kläranlage mit zumindest je einem Belebtschlammbecken und einem Nachklärbecken zur Trennung der Biomasse vom gereinigten Abwasser, wobei das Rohabwasser zusammen mit dem rückgeführten Schlamm dem Belebtschlammbecken in Bodennähe unter Ausbildung einer turbulenten Strömung zugeführt wird.

Durch Verschärfung der Abwassergesetzgebung wird von den Betreibern eine Verbesserung der Reinigung von kommunalem Abwasser, insbesondere durch effizientere Stickstoffentfernung verlangt.

Wegen der hohen Investitionskosten müssen sich die Verbesserungen innerhalb der bestehenden Anlagen einplanen oder durch ergänzende Anlagen in die bisherigen Systeme integrieren lassen.

Durch die verschiedenartigen Einleiter von kommunalen Abwässern müssen die Klärwerke mit wechselnden Abwassermengen, Schmutzzusammensetzung und -konzentrationen fertig werden. Darüberhinaus sind weitere Randbedingungen, wie unterschiedliche Betriebstemperaturen, Schlammanfall und Stromverbrauch zu berücksichtigen.

Aus der DE 37 29 239 ist eine Vorrichtung der eingangs genannten Art bekannt. Das dort beschriebene Reinigungsverfahren hat sich in der Praxis bewährt, jedoch sind durch die gestiegenen Anforderungen an die Abwasserreinigung die Grenzwerte nur unter bestimmten Voraussetzungen, wie ständige Überwachung und Nachregelung der Wasserstände und relative großer Beckenvolumina einzuhalten.

Üblicherweise wird zur Verbesserung der Effizienz eines Reinigungssystems der eingangs genannten Art der Einsatz von Belüftern und Rührern vorgeschlagen. So geht beispielsweise aus der DE-A-24 12 543 die Verwendung von um eine lotrechte Rotationsachse kreisenden Belüftern hervor, wobei die mittlere Trennwand der Strömungskanäle mit Aussparungen für den Durchgang der Belüfter ausgestattet ist.

In der US-A-5,234,595 wird die Aufteilung der Reinigungsbecken in eine obere und eine untere Behandlungszone vorgeschlagen. Die beiden Zonen werden durch eine Prallwand abgeschirmt, wobei in der jeweiligen Zone unterschiedliche Rührwerke vorgesehen sind.

In der DE-A-16 58 112 und in den US-Patenten 3,900,394 und 4,278,547 werden ebenfalls Reinigungsvorrichtungen mit mechanischen Rührwerken beschrieben. Für die Vorrichtung nach der deutschen Offenlegungsschrift werden zusätzliche Pumpen und Fördereinrichtungen benötigt, um den Rücklaufschlamm aus der hochbelasteten Belebungsphase in eine nachgeschaltete schwachbelastete Belebungsphase zu überführen. Aus den US-Patenten geht hervor, daß die Sauerstoffeinleitung über Walzenlüfter flächig erfolgt, wobei Prallbleche zur Verteilung der Sauerstoff angereicherten Suspension in der US-A-4,278,547 zusätzlich vorhanden sind.

Aufgabe der vorliegenden Erfindung ist es, die beschriebenen Nachteile zu vermeiden und eine Vorrichtung zu entwickeln, die die Einhaltung der durch die Abwasserverordnung vorgeschriebenen Grenzwerte bei minimalem Energieverbrauch ermöglicht.

Nach gründlicher Analyse der beim Betrieb von kommunalen Abwasseranlagen auftretenden Probleme wurde erkannt, daß zum Ausgleich unterschiedliecher Betriebszustände sehr viel längere Verweilzeiten als bisher in den Reinigungsverfahren bzw. Reinigungsanlagen erforderlich sind. Dies läßt sich mit einem vertretbaren technischen Aufwand erfindungsgemäß nur dadurch lösen, daß die bereits bestehenden Anlagen mit räumlich übereinander angeordneten Abwasser-Behandlungszonen betrieben werden.

In einem ersten Schritt wurde durch Einleitung eines Gemisches aus Rohabwasser und nitrathaltigem, rückgeführtem Wasser in Bodennähe des Belebtschlammes dafür gesorgt, daß eine ungestörte, stabile Denitrifikations mit anschließender Nitrifikation im oberen Teil des Belebtschlammbeckens stattfinden konnte. Für die Nitrifikationsvorgänge ist im Belebtschlamm ein hoher Sauerstoffgehalt erforderlich, wogegen für die Denitrifikationsvorgänge in einer anoxischen Belebungsbeckenzone leicht abbaubare Kohlenstoffverbindungen erforderlich sind.

Bei der Durchführung der Reinigung von kommunalem Abwasser in der erfindungsgemäßen Vorrichtung bildet sich eine Grenzschicht zwischen einer anaeroben und einer aeroben Zone aus. Durch diese Maßnahme wird dafür gesorgt, daß eine Vermischung zwischen der Nitrifikation- und Denitrifikationszone frühestens nach ca. 40 M. ab Zuführung des Rohabwassers erfolgt. Durch das Veratmen der beim biologischen Klärprozeß eingesetzten Bakterien wird der im Nitrat gebundene Sauerstoff der Kohlenstofffracht im wesentlich abgebaut, ehe sie nach oben in die belüftete Belebungsbeckenzone gelangt.

In der Nitrifikations- und Denitrifikationszone ist jeweils der optimale Zustand für die Wirksamkeit der Bakterien gegeben. Es hat sich anhand zahlreicher Versuche herausgestellt, daß für die Nitrifikation ein Schlammalter von mindestens 8 bis 10 Tage erforderlich ist, damit sich die Zahl der Bakterien ausreichend vermehrt hat. Die Bakterien werden in der belüfteten Zone benötigt, und es muß sichergestellt sein, daß bei dem erfindungsgemäßen Verfahren die Kondition der im Schlamm jeweils benötigten Bakterien richtig eingestellt ist.

Die in der Denitrifikationszone wirksamen Bakterien finden in der sauerstofffreien Zone durch die ständig zugeführten Kohlenstoffverbindungen optimale Bedingungen für die Nitratauflösung.

Mit der erfindungsgemäßen Vorrichtung wird die Schmutzfracht durch einen Rundumlauf des Schlamm-Wasser-Gemisches zunächst in den genannten Zonen (einer Denitrifikationszone und anschließenden Nitrifikationszone) getrennt geführt und anschließend gleichmäßig auf den gesamten Beckeninhalt verteilt, so daß sich keine erhöhten Konzentrationen in einem Teil des Beckens bilden können.

Ein weiterer, entscheidender Vorteil der erfindungsgemäßen Vorrichtung ist der geringe Energieverbrauch durch Verlagerung der Sauerstoffeinleitung in die hintere Zone des Belebtschlammbeckens. Da die verschiedenen Bakterientypen - wie erwähnt - in ihrer Aufgabe gezielt eingesetzt und effizienter arbeiten können, ist für die Belüftung nur eine punktuelle Eingabe am Ende des Rundumlaufs erforderlich. Durch den defizienten Denitrifizierungsvorgang wird der Ansäuerung des Abwassers entgegengewirkt. Das Verfahren zur Reinigung von Rohabwasser kann durch die punktuelle Zugabe genau dem wechselnden Sauerstoffbedarf bei schwankender Schmutzfracht angepaßt werden, so daß der Energieverbrauch der Gesamtanlage vermindert wird.

Im Gegensatz zur Erkenntnis beim Betrieb bekannter Vorrichtungen hat sich herausgestellt, daß ein Sauerstoffüberschuß schädlich ist, wenn die Bakterientypen ihre optimalen Lebensbedingungen erhalten sollen. Durch Einrichtung einer Sauerstoffmeßstelle hinter der Belüftung kann der exakte Sauerstoffverbrauch gemessen und eingestellt werden.

Falls durch Schwankungen der Abwasserzusammensetzung eine Erhöhung des Säuregehaltes entsteht, kann durch Veränderung des Sauerstoffgehaltes die Grenzschicht zwischen Denitrifizierung und Nitrifizierung verschoben und damit der pH-Wert gesteuert werden.

Im folgenden wird die Erfindung anhand von einem Ausführungsbeispiel näher erläutert. Es zeigen:
- Fig. 1:: Längsquerschnitt durch ein erfindungsgemäßes Belebtschlammbecken
- Fig. 2:: erfindungsgemäßes Belebtschlammbecken in Draufsicht

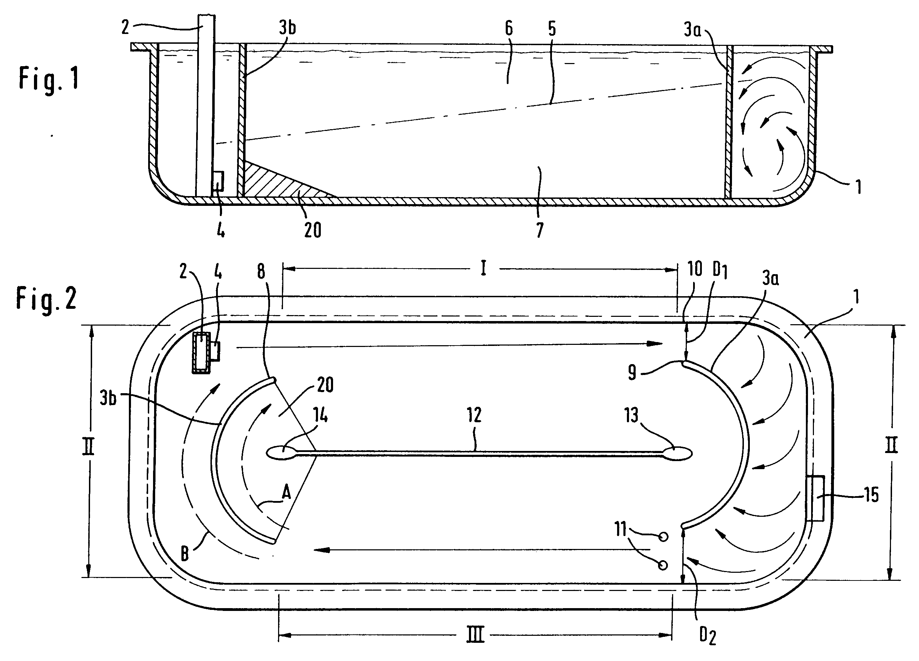

In Fig. 1 ist das Belebtschlammbecken mit 1, die Rohabwassereinleitung mit 2 und die Strömungswände mit 3a, b bezeichnet. Am unteren Ende der Rohabwassereinleitung 2 ist eine Strömungsauslaßöffnung 4 angedeutet, aus der das Rohabwasser mit dem rückgeführten Schlamm (Biomasse) unter Bildung einer Grenzschicht 5 austritt. Oberhalb der Grenzschicht 5 befindet sich die aerobe Nitrifikationszone 6 und unterhalb der Grenzschicht 5 die anaerobe Denitrifikationszone 7.

In der Draufsicht in Fig. 2 ist das Belebtschlammbecken 1 mit zwei etwa kreissegmentförmigen Strömungswänden 3a, 3b als langgestrecktes, im wesentlichen rechteckförmiges Becken mit abgerundeten Kanten zu erkennen. In einem der Eckpunkte befindet sich die Abwassereinleitung 2, aus der das Rohabwasser mit dem rückgeführten Schlamm (Biomasse) unter Bildung einer Grenzschicht austritt. Das Rohabwasser wird dabei an der Längskante des Beckenrandes entlanggeführt, wobei das Auslaufende 8 der Strömungswand 3b verhindert, daß das Rohabwasser direkt in die Beckenmitte verströmt. Beim Erreichen der vorderen Kante 9 der Strömungswand 3a wird das inzwischen vermischte Rohabwasser gezielt umgelenkt, wobei der Querschnitt D2 am Austrittsende zwischen Strömungswand 3a und Beckenrand 10 etwa 1,5 mal D1 an der Eintrittsöffnung zwischen Vorderkante 9 und Beckenrand 10 ist.

Durch diese Strömungszuführung wird erreicht, daß in dem Abschnitt I des Belebtschlammbeckens ein im wesentlichen schichtartiger Aufbau zwischen Rohabwasser, Denitrifikations- und Nitrifikationszone besteht, während im Abschnitt II eine walzenförmige Strömung die horizontale Schichtung auflöst und zu einer Umwälzung des gesamten Beckeninhalts führt.

Wie aus Fig. 2 zu erkennen, sind die Strömungswände 3a, 3b versetzt zur Symmetrieachse des Beckens angeordnet. Strömungswand 3a, die in der Draufsicht in etwa ein halbkreisförmiges Segment ist, befindet sich mit der in Strömungsrichtung vorderen Kante 9 dichter am Beckenrand als mit der hinteren Strömungskante. Die walzenförmige Strömung ist in Form von Spiralen in der Fig. 2 angedeutet.

Am Auslaufende 8 der Strömungswand 3b ist ein größerer Abstand zum Beckenrand als an der gegenüberliegenden Einlaufkante, wodurch sich in Zusammenwirkung mit der Keilfläche 20 eine Überlagerung der Strömungsebene (aerobe/anaerobe Schicht) ergibt.

Am hinteren Ende der Strömungswand 3a befindet sich die punktförmige Sauerstoffeinleitung 11. Über ein Meßgerät (nicht dargestellt) wird der Sauerstoffbedarf festgestellt und die entsprechende Sauerstoffzugabe geregelt. Ein weiteres Meßgerät kann sich zur Kontrolle an der Strömungswand 3b befinden, wodurch die in der Reaktionszone III erfolgende Nitrifikation hinsichtlich ihres Umsetzungsgrades bestimmt wird.

Sobald das gerade strömende Abwasser-Schlammgemisch die Strömungswand 3b erreicht, wird von dem rückgeführten Teil A ein kohlestoffhaltiger Teil B abgetrennt. Der Teil B wird mit dem Rohabwasser an der Einleitung 2 vermischt, während Teil A im Inneren des Belebtschlammbeckens umläuft. Zur Aufrechterhaltung einer gelenkten Strömung ist zusätzlich eine Mittentrennung 12 vorgesehen, an deren Enden jeweils ein Strömungszapfen 13, 14 angeordnet ist.

Eine mangelnde Denitrifizierung führt dazu, daß das über den Überlauf 15 abgezogene Wasser nicht vollständig abgebaute Kohlenstoffverbindungen sowie Nitratstickstoff enthält. Diese können dann unkontrolliert in das Nachklärbecken gelangen, was zu Unregelmäßigkeiten bei der mechanischen Trennung der Biomasse von gereinigtem Abwasser führt. Mit der erfindungsgemäßen Vorrichtung zur Reinigung von kommunalen Abwässern ist es möglich, auch bei Schwankungen in der Zusammensetzung der Schmutzwasserfracht die Denitrifikation vollständig innerhalb des Belebtschlammbeckens 1 durchzuführen.

Durch die Teilung der Strömungen und Wechsel der Strömungsquerschnitte wird eine spiralförmige, nach Art eines Kegels sich erweiternde Umwälzung in der Zone II erreicht. Durch die darauf folgende Umlenkung der Strömung an den Leitblechen 3b wird das bisher in der Denitrifikationszone geführte Schlamm-Wasser-Gemisch angehoben und in die Nitrifikationszone überführt. Dieses kann durch eine keilförmige Fläche 20 oder andere Strömungsmittel erleichtert werden. Insgesamt wird durch die versetzte Anordnung der Strömungswände 3a, b eine gezielte Verteilung der Schmutzfracht im Beckenraum erreicht.

### Bezugszeichenliste

- 1: Belebtschlammbecken
- 2: Rohabwassereinleitung
- 3: Strömungswand
- 4: Strömungsauslaßöffnung
- 5: Grenzschicht
- 6: Nitrifikationszone
- 7: Denitrifikationszone
- 8: Auslaufende
- 9: Kante
- 10: Beckenrand
- 11: Sauerstoffeinleitung
- 12: Mittentrennung
- 13: Strömungszapfen
- 14: Strömungszapfen
- 15: Überlauf
- 20: Keilfläche

## Patentansprüche

1. Vorrichtung zum Reinigen von insbesondere kommunalem Abwasser in einer biologischen Kläranlage mit zumindest je einem Belebtschlammbecken (1) und einem Nachklärbecken zur Trennung der Biomasse vom gereinigten Abwasser, wobei das Rohwasser zusammen mit dem rückgeführten Schlamm dem Belebtschlamm in Bodennähe unter Ausbildung einer turbulenten Strömung in einer Denitrifikationszone (7) zugeführt wird und in einem langgestreckten Belebtschlammbecken (1) mit einer an den Längsenden angeordneten Strömungsumkehr mehrere, kreissegmentförmig ausgebildete Strömungswände (3a, b) angeordnet sind,
dadurch gekennzeichnet,
daß eine Zuführungsleitung (2) für das Rohabwasser und den rückgeführten Schlamm in Bodennähe des Beckens (1) angeordnet ist,
daß die Strömungswände (3a, b) am Boden des Belebtschlammbeckens mit je einer Wandunterseite befestigt sind, während die gegenüberliegende Wandoberkante aus dem Abwasser herausragt und daß an der Stömungswand (3b) ein keilförmiges Strömungsmittel (20) angeordnet ist, wodurch das Schlamm-Wasser-Gemisch am Auslaufende (8) angehoben und in eine Nitrifikationszone (6) mit zwei räumlich übereinander angeordnete Abwasser-Behandlungszonen übergeführt wird,
daß die Strömungswände (3a, b) versetzt zur Symmetrieachse des Beckens (1) angeordnet sind, wobei die Strömungswand (3a), die in der Draufsicht in etwa ein halbkreisförmiges Segment ist, mit der in Strömungsrichtung vorderen Kante (9) dichter am Beckenrand angeordnet ist als mit der hinteren Strömungskante und das Auslaufende (8) der Strömungswand (3b) mit einem größeren Abstand zum Beckenrand als an der gegenüberliegenden Einlaufkante angeordnet ist,
und daß eine punktuelle Einleitung (11) von Sauerstoff quer zur Strömungsrichtung im Belebtschlammbecken (1) unmittelbar hinter der Strömungswand (3a) angeordnet ist.

## Claims

1. A device for purifiying especially municipal wastewater in a biological purification plant having at least one activated sludge tank (1) and a secondary settling tank for separating the biomass from the purified wastewater, with the raw water, together with the returned sludge, being added to the activated sludge in the vicinity of the base, while there is formed a turbulent flow in a denitrification zone (7) and with an elongated activated sludge tank (1) with flow reversing means arranged at the longitudinal ends containing a plurality of flow walls (3a, b) shaped like segments of a circle,
characterised in
that a supply line (2) for the raw wastewater and for the returned sludge is arranged in the vicinity of the base of the tank (1);
that the flow walls (3a, b) are secured at the base of the activated sludge tank by means of one wall underside each, whereas the opposed upper wall edge projects from the wastewater and that, at the flow wall (3b), there are arranged wedge-shaped flow means (20), as a result of which the sludge/water mixture is lifted at the run-out end (8) and transferred into a nitrification zone (6) with two wastewater treatment zones arranged one above the other;
that the flow walls (3a, b) are arranged so as to be offset relative to the axis of symmetry of the tank (1), that by means of the front edge (9) with reference to the direction of flow, the flow wall (3a) which, in a plan view, has the shape of a semicircular segment, is closer to the tank edge than by means of the rear flow edge, and that the run-out end (8) of the flow wall (3b) is arranged at a greater distance from the tank edge than the opposed run-in edge;
and that introducing means (11) for introducing oxygen in a point-like way are arranged transversely to the direction of flow in the activated sludge tank (1) directly behind the flow wall (3a).

## Revendications

1. Dispositif pour l'épuration d'eau d'égout, notamment communale, dans une installation d'épuration biologique avec au moins, chaque fois, un bassin de boue activée (1) et un bassin de décantation finale pour séparer la biomasse de l'eau d'égout épurée, l'eau brute étant apportée conjointement avec la boue recyclée au bassin de boue activée à proximité du fond dans une zone de dénitrification (7) en formant un écoulement turbulent, et plusieurs cloisons d'écoulement (3a, 3b), réalisées en forme de segments de cercle, étant disposées dans un bassin de boue activée (1) oblong avec une inversion d'écoulement disposée aux extrémités longitudinales,
**caractérisé** en ce qu'une conduite d'alimentation (2) pour l'eau d'égout brute et la boue recyclée est disposée à proximité du fond du bassin (1),
en ce que les cloisons d'écoulement (3a, 3b) sont fixées sur le fond du bassin de boue activée par un dessous de cloison respectif, tandis que le bord supérieur opposé de la cloison dépasse de l'eau d'égout, et en ce qu'un moyen d'écoulement (20) en forme de coin est disposé sur la cloison d'écoulement (3b), de sorte que le mélange de boue et d'eau est remonté à l'extrémité de sortie (8) et transféré dans une zone de nitrification (6), deux zones de traitement de l'eau d'égout étant disposées spatialement l'une au-dessus de l'autre,
en ce que les cloisons d'écoulement (3a, 3b) sont disposées en décalage par rapport à l'axe de symétrie du bassin (1), la cloison d'écoulement (3a), qui est en vue de dessus un segment approximativement semi-circulaire, étant disposée avec son bord antérieur (9) dans la direction d'écoulement plus près du bord du bassin que son bord d'écoulement postérieur, et l'extrémité de sortie (8) de la cloison d'écoulement (3b) étant disposée à une plus grande distance du bord du bassin que le bord d'entrée, opposé, de cette cloison d'écoulement,
et en ce qu'une conduite (11) d'introduction ponctuelle d'oxygène transversalement à la direction d'écoulement dans le bassin de boue activée (1) est disposée immédiatement après la cloison d'écoulement (3a).
